# EUROPÄISCHE PATENTSCHRIFT

(11) **EP 2 832 489 B1**
(45) Veröffentlichungstag und Bekanntmachung des Hinweises auf die Patenterteilung: **14.04.2021**
(21) Anmeldenummer: 14176637.8
(22) Anmeldetag: 11.07.2014
(51) Int. Cl.: B23P 6/00, F01D 5/00, B23K 35/02, F01D 25/24, F01D 9/04

(54) **Verfahren zur Reparatur eines Aufnahmehakens für Leitschaufeln**
Method for repairing a mounting hook for guide vanes
Procédé de réparation d'un crochet de réception pour des aubes directrices

(30) Priorität: 29.07.2013 DE 102013214781
(43) Veröffentlichungstag der Anmeldung: 04.02.2015
(73) Patentinhaber: MTU Aero Engines AG, 80995 München (DE)
(72) Erfinder: Engber, Martin, 80939 München (DE); Werner, Wolfgang, 85296 Rohrbach (DE); Eckart, Dirk, 82515 Wolfratshausen (DE); Lorenz, Jürgen, 86510 Ried (DE); Loders, Andreas, 85232 Bergkirchen (DE)

(56) Entgegenhaltungen:
- EP-A1- 1 491 720
- EP-A1- 1 867 835
- EP-A1- 2 113 330
- DE-A1-102010 026 084
- FR-A1- 2 982 782
- US-A1- 2003 180 143
- US-A1- 2005 015 980
- US-A1- 2005 246 893
- US-A1- 2007 077 148
- US-A1- 2011 049 112
- US-A1- 2012 148 395
- US-B1- 6 364 971
- COURTOT B: "Repair Welding Of High Temperature Nickel Super Alloy Castings", THESIS. SCHOOL OF APPLIED SCIENCES, , 1. September 2007 (2007-09-01), Seiten 1-81, XP008108368, Gefunden im Internet: URL:https://aerade.cranfield.ac.uk/bitstre am/1826/2598/1/Courtot-2007.pdf
- Andres Gasser ET AL: "Maßgeschneiderte Oberflächen und Bauteile : Der Einsatz von Laserstrahlung in der Oberflächentechnik und im Rapid Manufacturing - Teil 1", Laser Technik Journal, vol. 7, no. 4, 1 July 2010 (2010-07-01), pages 47-53, XP055658309, ISSN: 1613-7728, DOI: 10.1002/latj.201090061

## Beschreibung

Die vorliegende Erfindung betrifft ein Verfahren zur Reparatur eines Aufnahmehakens für Leitschaufeln gemäß Anspruch 1.

In Strömungsmaschinen, insbesondere in Gasturbinen, werden regelmäßig einzelne Bauteile wie beispielsweise Leitschaufeln an Halterungen im Gehäuse aufgehängt oder fixiert. Diese Aufhängungen können mit der Zeit verschleißen oder vorgegebene Toleranzen überschreiten, so dass sie repariert werden müssen.

Eine Aufgabe der vorliegenden Erfindung ist es, ein Verfahren zur Reparatur von Aufnahmehaken für Leitschaufeln in Strömungsmaschinen vorzuschlagen.

Die erfindungsgemäße Aufgabe wird durch ein Verfahren mit den Merkmalen des Anspruchs 1 gelöst.

Erfindungsgemäß wird somit ein Verfahren zur Reparatur eines Aufnahmehakens vorgeschlagen, wobei der Aufnahmehaken in einem Gehäuse, insbesondere in einem Verdichtergehäuse, einer Strömungsmaschine, insbesondere einer Gasturbine, angeordnet ist.

Ein erster Schritt des erfindungsgemäßen Verfahren umfasst das Abtragen von erstem Material in einem Bereich des Aufnahmehakens. Der Bereich des Aufnahmehakens, in dem das erste Material abgetragen wird, erstreckt sich dabei über den gesamten Umfang des Gehäuses, also über 360 Grad.

Der sich anschließende, jedenfalls aber nach dem ersten Schritt erfolgende zweite erfindungsgemäße Verfahrensschritt umfasst das Auftragen von zweitem Material in jenem Bereich des Aufnahmehakens, in welchem zuvor erstes Material abgetragen wurde. Der aufgetragene Bereich erstreckt sich somit ebenfalls über den gesamten Umfang des Gehäuses. Das Auftragen erfolgt unter Anwendung von lokaler Wärme mittels eines Laser-Pulver-Auftragsschweißverfahrens und/oder eines Plasma-Schweißverfahrens. Das Auftragen erfolgt in mehreren Lagen, welche in Umfangsrichtung aufgetragen werden.

Vorteilhafte Weiterentwicklungen der vorliegenden Erfindung sind jeweils Gegenstand der Unteransprüche.

Im Folgenden werden als Strömungsmaschinen rein beispielhaft insbesondere Gasturbinen beschrieben, ohne jedoch Strömungsmaschinen auf Gasturbinen beschränken zu wollen.

Vorzugsweise ist der Aufnahmehaken in einem Verdichtergehäuse einer Gasturbine angeordnet oder wird zu seinem Gebrauch lösbar mit diesem verbunden.

Vorzugsweise ist der Aufnahmehaken eine Halterung.

Das Reparieren des Aufnahmehakens ist insbesondere aufgrund von Verschleiß notwendig. Beispielsweise kann eine Reparatur in Verdichtergehäusen von Gasturbinen aufgrund von Verschleiß in den Aufnahmen (oder Halterungen) von Leitschaufelsegmenten im Gehäuse der Gasturbine notwendig werden.

Ein Verschleiß kann ein Überschreiten von vorgegebenen Toleranzen bedeuten.

Der Begriff "Abtragen", wie er hierin verwendet wird, bezeichnet ein Entfernen, insbesondere ein Entfernen mittels eines mechanischen Bearbeitungsverfahren, beispielsweise mittels Drehen oder Fräsen. Ein Abtragen kann weiterhin mittels Erodieren, Laserabtrag oder einem anderen Verfahren erfolgen.

Ein Abtragen kann schrittweise, stufenweise, schichtweise oder bereichsweise erfolgen.

Der Bereich, von dem erstes Material abgetragen wird und der sich erfindungsgemäß über den gesamten Umfang erstreckt weist Verschleißspuren oder verschlissene Bereiche auf.

Es wird erstes Material des Bereichs des Aufnahmehaken abgetragen, wobei das erste Material insbesondere verschlissene Bereiche des Aufnahmehakens umfasst.

Das Abtragen von erstem Material umfasst sowohl verschlissene als auch nicht verschlissene Bereiche des Aufnahmehakens. Das Abtragen von erstem Material umfasst einzelne Stege, Absätze, vollständige oder einzelne Bereiche von Leitschaufelaufnahmen über dem gesamten Umfang in Strömungsrichtung des Aufnahmehakens.

Mit dem Begriff "lokale Wärme" wie er hierin verwendet wird, wird ein Wärmeeintrag bezeichnet, der auf ein lokal begrenztes Gebiet oder einen lokal begrenzten Bereich und deren unmittelbare Umgebung beschränkt ist. Beispielsweise erfordern die meisten Schweißverfahren einen großflächigen Bereich für den Wärmeeintrag, um das jeweilige Schweißverfahren durchführen zu können. Nur bei bestimmten Schweißverfahren, von denen im Folgenden zwei Verfahren beschrieben werden, ist ein lokaler Wärmeeintrag ausreichend.

Ein Auftragen des zweiten Materials unter Anwendung von lokaler Wärme erfolgt erfindungsgemäß mittels dem Laser-Pulver-Auftragsschweißverfahren und/oder dem Plasma-Schweißverfahren. Bei diesen Schweißverfahren wird in den Bereich des zu schweißenden Bauteils, hier dem Bereich des Aufnahmehakens, im Vergleich zu anderen Schweißverfahren wenig Wärme eingebracht. Damit kann die Temperaturerhöhung in dem Bereich und damit auch in dem gesamten Aufnahmehaken begrenzt werden. Eine geringe oder begrenzte Temperaturerhöhung kann einen möglichen Bauteilverzug des Aufnahmehakens und des gesamten Gehäuses vorteilhaft minimieren.

Erfindungsgemäß erfolgt das Auftragen des zweiten Materials auf den Bereich des Aufnahmehakens in mehreren Lagen in Umfangsrichtung. Die Lagen können übereinander und nacheinander aufgetragen werden. Das Auftragen jeder Lage kann zeitversetzt erfolgen, um beispielsweise bestimmte und vorgegebene Betriebsparameter wie z. B. Aufwärm- oder Abkühlraten jeder einzelnen Lage einhalten zu können.

Vorzugsweise werden bis zu 100 Lagen oder mehr aufgetragen.

Vorzugsweise ist eine Lage des aufgetragenen zweiten Materials zwischen 0,1 mm und 1 mm in radialer Richtung, bezogen auf die Drehachse der Gasturbine, hoch. Eine Lage ist insbesondere 0,3 mm hoch.

Vorzugsweise ist eine Lage zwischen 0,5 mm und 2 mm in axialer Richtung (in Durchströmungsrichtung der Gasturbine) breit, insbesondere 1 mm breit.

Vorzugsweise wird als weiterer Verfahrensschritt ein Wärmebehandeln des Aufnahmehakens nach dem Auftragen des zweiten Materials ausgeführt.

Vorzugsweise wird das Verdichtergehäuse der Gasturbine mit dem reparierten Aufnahmehaken im Einbauzustand wärmebehandelt.

Ein Wärmebehandeln kann in gewissen erfindungsgemäßen Ausführungsformen ein Tempern sein oder umfassen. Beim Tempern kann der Aufnahmehaken und/oder das Verdichtergehäuse über einen längeren Zeitraum erhitzt werden, um beispielsweise mechanischen Spannungen in dem Aufnahmehaken und/oder dem Verdichtergehäuse entgegen zu wirken, z. B. um mechanische Spannungsspitzen in ihrer Höhe zu reduzieren.

Vorzugsweise wird der Aufnahmehaken nach dem Auftragen des zweiten Materials mittels materialabtragender Verfahren endbearbeitet, beispielsweise um konstruktiv vorgegebene Geometrien oder Maße zu erzielen oder einzuhalten. Materialabtragende Verfahren können insbesondere spanabhebende Verfahren oder Schleifverfahren sein.

Vorzugsweise wird das zweite Material unter Verwendung eines Schweißzusatzes auf den Aufnahmehaken aufgetragen. Der Schweißzusatz kann die Verschleißeigenschaften des reparierten Bauteils verbessern. Damit kann das reparierte Bauteil beispielsweise einen geringeren Verschleiß aufweisen und eventuell eine längere Standzeit oder Einsatzdauer ermöglichen.

Manche oder alle erfindungsgemäßen Ausführungsformen können einen, mehrere oder alle der oben und/oder im Folgenden genannten Vorteile aufweisen.

Eine Rekonstruktion oder eine Reparatur des Aufnahmehakens kann aufgrund einer Verformung oder einer Ovalisierung eines Verdichtergehäuses notwendig werden. Eine Verformung oder Ovalisierung des Verdichtergehäuses im Betrieb kann ein sogenanntes Anstreifen von rotierenden Bauteilen der Gasturbine zur Folge haben, mit nachfolgendem Leistungsverlust und/ oder Stabilitätsverlust der Gasturbine. Eine Anwendung des erfindungsgemäßen Verfahrens zur Reparatur des Aufnahmehakens kann bei derartigen Verformungen vorteilhaft sein.

Beim erfindungsgemäßen Verfahren wird nur eine geringe Wärmemenge (im Vergleich zu anderen Fügeverfahren, beispielsweise dem Wolfram-Inertgasschweißen, abgekürzt WIG) als lokale Wärme eingebracht. Aufgrund dieser geringen Wärmemenge kann vorteilhaft ein Verzug des Aufnahmehakens und benachbarter Bereiche der Gasturbine, insbesondere des Verdichtergehäuses, minimiert, begrenzt oder gering gehalten werden.

Erfindungsgemäß erstreckt sich das Auftragen des zweiten Materials über den gesamten Umfang des Gehäuses. Aufgrund einer gleichmäßigen Wärmeeinbringung über den gesamten Umfang über 360 Grad wird vorteilhaft ein geringer Verzug (im Vergleich zu einer nicht über den gesamten Umfang erfolgten Wärmeeinbringung, also beispielsweise einer nur lokalen Schweißung) im gebrauchsgemäßen Betrieb der Gasturbine erreicht. Ein Verzug kann durch lokale Restspannungen, die insbesondere aufgrund der Schweißung verursacht sein können, in dem Aufnahmehaken und angrenzenden Bereiche auftreten.

Mit dem erfindungsgemäßen Verfahren kann der Aufnahmehaken vorteilhaft analog einer Neuteilfertigung gefertigt werden, und zwar u. a. hinsichtlich Fertigungsgenauigkeit und/oder Festigkeitseigenschaften, welche gleich oder höher als beim Neuteils sein können.

Mit dem erfindungsgemäßen Auftragen von zweitem Material kann vorteilhaft ein Aufnahmehaken rekonstruiert werden, der verschleißresistenter sein kann als das Grundmaterial des Aufnahmehakens, auf das das zweite Material aufgetragen wurde. Dies kann beispielsweise mittels einer Schweißung erreicht werden, bei der ein verschleißresistenteres Material als das Grundmaterial aufgetragen wird. Das Grundmaterial kann beispielsweise rein exemplarisch das Gußmaterial mit der Bezeichnung "IN718" sein. Das mittels Schweißung aufgetragene zweite Material kann durch geeignete Schweißzusätze noch weiter optimiert und die Verschleißfestigkeit dadurch erhöht werden.

Die Lagen des aufgetragenen Materials in dem Bereich des Aufnahmehakens können zwischen 0,1 mm und 1 mm, insbesondere 0,3 mm hoch sein. Aufgrund dieser geringen Höhen kann ein Verzug der Lagen vorteilhaft gering gehalten werden. Es können Verzugsmaße von ca. 0,1 mm oder geringer erreicht werden.

Bei Anwendung des erfindungsgemäßen Verfahren kann das Laser-Pulver-Auftragsschweißverfahren durch Verwenden von geeigneten Pulvern oder Verändern der Laserleistung vorteilhaft Einfluss auf die Verschleißfestigkeit oder Schweißbarkeit des Aufnahmehakens nehmen.

Mittels des erfindungsgemäßen Verfahren können vorteilhaft alle vorgegebenen Überholungsintervalle (auch als "TBO" - Time between overhaul bezeichnet) der Gasturbine eingehalten werden, d. h. zusätzliche oder außerplanmäßige Überholungen können vermieden werden.

Die vorliegende Erfindung wird im Folgenden anhand der beigefügten Zeichnungen, in welcher identische Bezugszeichen gleiche oder ähnliche Bauteile bezeichnen, exemplarisch erläutert. In den jeweils schematisch vereinfachten Figuren gilt:
- **Fig. 1**: zeigt ein Verdichtergehäuse einer Gasturbine mit mehreren verschlissenen Aufnahmehaken für Leitschaufeln;
- **Fig. 2**: zeigt einen verschlissenen Aufnahmehaken aus Fig. 1 in einer Detailansicht; und
- **Fig. 3a-d**: zeigen erfindungsgemäße Verfahrenschritte zur Reparatur eines verschlissenen Aufnahmehakens.

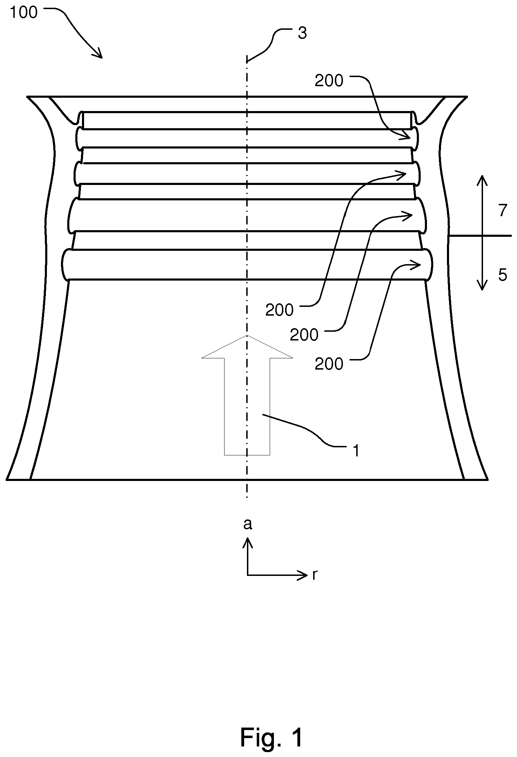

**Fig. 1** zeigt ein Verdichtergehäuse 100 einer Gasturbine mit mehreren verschlissenen Aufnahmehaken 200 für Leitschaufeln. Die Leitschaufeln werden ringförmig in die Aufnahmehaken 200 eingeführt und mit diesen verbunden.

Die Hauptdurchströmungsrichtung 1 der Gasturbine und des Verdichtergehäuses verläuft in Axialrichtung a wie mittels eines Pfeils dargestellt. Die Radialrichtung r weist von der Mittelachse 3 der Gasturbine radial nach außen.

Beim Verdichtergehäuse kann ein vorderer Teil 5 und ein hinterer Teil 7 unterschieden werden. In diesem Ausführungsbeispiel sind insbesondere verschlissene Aufnahmehaken 200 im hinteren Teil 7 des Verdichtergehäuses dargestellt oder diskutiert.

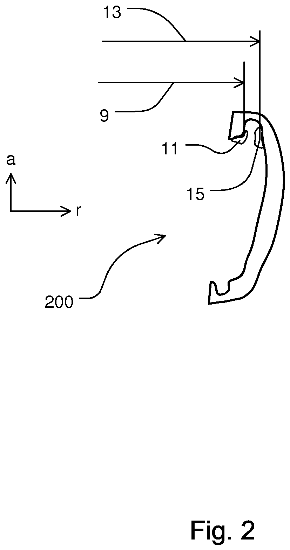

**Fig. 2** zeigt einen verschlissenen Aufnahmehaken 200 aus Fig. 1 in einer Detailansicht.

An einem inneren Durchmesser 9 (in Radialrichtung r betrachtet) des oberen Bereichs des Aufnahmehakens 200 sind Verschleißspuren mittels eines Abriebbereichs 11 dargestellt.

Gleichfalls sind an einem äußeren Durchmesser 13 des Aufnahmehakens 200 Verschleißspuren mittels eines Abriebbereichs 15 dargestellt.

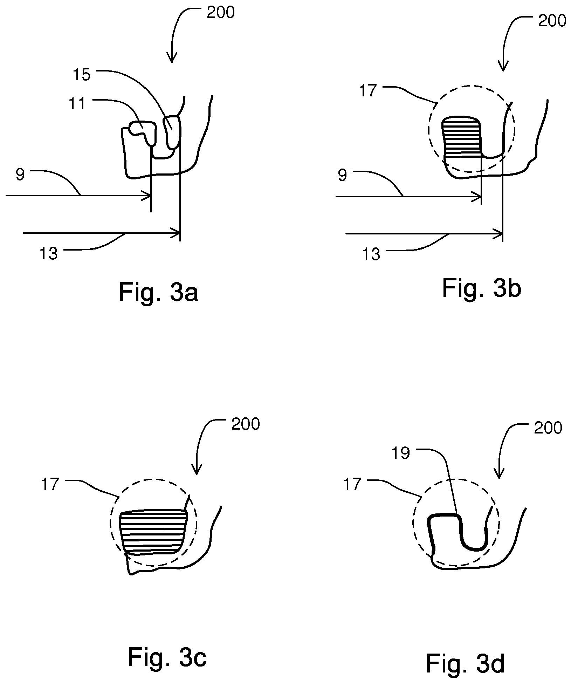

**Fig. 3a** zeigt einen unteren Bereich eines verschlissenen Aufnahmehakens 200, bezogen auf die Ansicht in Fig. 2, in einer weiteren Detailansicht. Am inneren Durchmesser 9 ist der Abriebbereich 11 dargestellt, am äußeren Durchmesser 13 der Abriebbereich 15.

Der Zustand des Aufnahmehakens in Fig. 3a entspricht dem Ausgangszustand, oder dem Startzustand, des erfindungsgemäßen Verfahrens.

**Fig. 3b** zeigt den erfindungsgemäßen Verfahrenschritt des Abtragens von erstem Material des Bereichs 17 des Aufnahmehakens 200. Die schraffierte Darstellung in dem Bereich 17 zeigt das abzutragende oder bereits abgetragene erste Material. Die Schraffur deutet ein schichtweises Abtragen des ersten Materials an.

Es wird erstes Material sowohl am inneren Durchmesser 9 als auch am äußeren Durchmesser 13 abgetragen. Das Abtragen erfolgt über den gesamten Umfang des Aufnahmehakens.

**Fig. 3c** zeigt den erfindungsgemäßen Verfahrenschritte des Auftragens von zweitem Material im Bereich 17 des Aufnahmehakens 200. Die schraffierte Darstelllung in dem Bereich 17 zeigt das aufzutragende oder bereits aufgetragene zweite Material.

Das zweite Material wird mittels eines Laser-Pulver-Auftragsschweißverfahren aufgetragen. Das Pulver kann schichtweise aufgetragen werden, wie dies durch die Schraffur angedeutet wird.

**Fig. 3d** zeigt die Kontur 19 (dicke Strichstärke) des endbearbeiteten Bereichs 17 des Aufnahmehakens 200. Fig. 3d stellt den rekonstruierten Bereich 17 nach Durchführung der Verfahrensschritten des erfindungsgemäßen Verfahrens dar.

**Bezugszeichenliste**

| **Bezugszeichen** | **Beschreibung** |
|---|---|
| 100 | Verdichtergehäuse einer Gasturbine |
| 200 | Aufnahmehaken |
| a | Axialrichtung |
| r | Radialrichtung |
| 1 | Hauptdurchströmungsrichtung |
| 3 | Mittelachse |
| 5 | vorderen Teil des Verdichtergehäuses |
| 7 | hinterer Teil des Verdichtergehäuses |
| 9 | innerer Durchmesser |
| 11 | Abriebbereich am inneren Durchmesser |
| 13 | äußerer Durchmesser |
| 15 | Abriebbereich am äußeren Durchmesser |
| 17 | Bereich des Aufnahmehakens zum Abtragen von erstem Material und zum Auftragen von zweitem Material |
| 19 | endbearbeitete Kontur des Aufnahmehakens |

## Patentansprüche

1. Verfahren zur Reparatur eines Aufnahmehakens (200) für Leitschaufeln, wobei der Aufnahmehaken (200) in einem Gehäuse (100) einer Strömungsmaschine angeordnet ist,
mit den Schritten:
- Abtragen von erstem Material in einem Bereich (17) des Aufnahmehakens (200), wobei sich der Bereich (17) über den gesamten Umfang des Gehäuses (100) erstreckt; und anschließend
- Auftragen von zweitem Material in dem oder auf den Bereich (17), wobei sich der aufgetragene Bereich (17) über den gesamten Umfang des Gehäuses (100) erstreckt, wobei das Auftragen unter Anwendung von lokaler Wärme mittels eines Laser-Pulver-Auftragsschweißverfahrens und/oder eines Plasma-Schweißverfahrens erfolgt, und wobei das Auftragen in mehreren Lagen, welche in Umfangsrichtung aufgetragen werden, erfolgt.

2. Verfahren nach Anspruch 1, wobei eine Lage zwischen 0,1 mm und 1 mm hoch, insbesondere 0,3 mm hoch ist.

3. Verfahren nach Anspruch 1 oder 2, wobei eine Lage zwischen 0,5 mm und 2 mm breit, insbesondere 1 mm breit ist.

4. Verfahren nach einem der vorangegangenen Ansprüche, mit dem weiteren Schritt:
- Wärmebehandeln des Aufnahmehakens (200) oder Abschnitten hiervon nach dem Schritt des Auftragens des zweitem Materials.

5. Verfahren nach Anspruch 4, wobei das Wärmebehandeln des Aufnahmehakens 200 oder Abschnitten hiervon ein Tempern umfasst.

6. Verfahren nach einem der vorangegangenen Ansprüche, mit dem weiteren Schritt:
- Endbearbeiten, insbesondere zum Erzielen konstruktiv vorgegebener Geometrien, des Aufnahmehakens (200) mittels materialabtragender Verfahren.

7. Verfahren nach einem der vorangegangenen Ansprüche, mit dem weiteren Schritt:
- Verwenden eines Schweißzusatzes bei dem Auftragen des zweiten Materials.

## Claims

1. Method for repairing a receiving hook (200) for guide vanes, wherein the receiving hook (200) is arranged in a housing (100) of a turbomachine, the method comprising the steps of:
- removing first material in a region (17) of the receiving hook (200), wherein the region (17) extends over the entire circumference of the housing (100); and subsequently
- depositing second material in or onto the region (17), wherein the region (17) in or onto which said material is deposited extends over the entire circumference of the housing (100), wherein the deposition is carried out by applying local heat by means of a laser powder deposition welding process and/or a plasma welding process, and wherein the deposition is carried out in a plurality of layers which are deposited in the circumferential direction.

2. Method according to claim 1, wherein a layer is between 0.1 mm and 1 mm high, in particular 0.3 mm high.

3. Method according to either claim 1 or claim 2, wherein a layer is between 0.5 mm and 2 mm wide, in particular 1 mm wide.

4. Method according to any of the preceding claims, comprising the additional step of:
- heat-treating the receiving hook (200) or portions thereof after the step of depositing the second material.

5. Method according to claim 4, wherein the heat treatment of the receiving hook (200) or portions thereof comprises annealing.

6. Method according to any of the preceding claims, comprising the additional step of:
- finishing the receiving hook (200) by means of material-removing processes, in particular in order to achieve geometries specified by the design.

7. Method according to any of the preceding claims, comprising the additional step of:
- using a filler material when depositing the second material.

## Revendications

1. Procédé de réparation d'un crochet de réception (200) pour aubes directrices, le crochet de réception (200) étant disposé dans un carter (100) d'une turbomachine, comportant les étapes :
- d'enlèvement du premier matériau dans une zone (17) du crochet de réception (200), la zone (17) s'étendant sur toute la circonférence du carter (100) ; puis
- d'application d'un second matériau dans ou sur la zone (17), la zone appliq uée (17) s'étendant sur toute la circonférence du carter (100), l'application étant effectuée à l'aide de chaleur locale au moyen d'un procédé de soudage par application de poudre au laser et/ou d'un procédé de soudage au plasma, et l'application étant effectuée en plusieurs couches qui sont appliquées dans la direction circonférentielle.

2. Procédé selon la revendication 1, dans lequel une couche présente une hauteur comprise entre 0,1 et 1 mm, en particulier une hauteur de 0,3 mm.

3. Procédé selon la revendication 1 ou 2, dans lequel une couche présente une largeur comprise entre 0,5 et 2 mm, en particulier une largeurde 1 mm.

4. Procédé selon l'une des revendications précédentes, comportant l'étape supplémentaire :
- de traitement thermique du crochet de réception (200) ou de parties de celui-ci après l'étape d'application du second matériau.

5. Procédé selon la revendication 4, dans lequel le traitement thermique du crochet de réception (200) ou de parties de celui-ci comprend un recuit.

6. Procédé selon l'une des revendications précédentes, comportant l'étape supplémentaire :
- de finition, en particulier pour obtenirdes géométries structurellement prédéfinies, du crochet de réception (200) au moyen de procédés d'enlèvement de matière.

7. Procédé selon l'une des revendications précédentes, comportant l'étape supplémentaire :
- d'utilisation d'un métal d'apport de soudage lors de l'application du second matériau.
